# EUROPEAN PATENT APPLICATION

(11) **EP 4 782 139 A1**
(43) Date of publication of application: **29.07.2026**
(21) Application number: 25227187.9
(22) Date of filing: 24.12.2025
(51) Int. Cl.: B23K 26/06, B23K 26/21, B23K 26/342

(54) **LASER PROCESSING METHOD AND CORRESPONDING LASER PROCESSING HEAD**

(30) Priority: 21.01.2025 IT 202500001008
(71) Applicant: AltForm S.r.l., 10128 Torino (TO) (IT)
(72) Inventor: LIBRERA, Erica, 10128 Torino (TO) (IT)
(74) Representative: Buzzi, Notaro & Antonielli d'Oulx S.p.A.

(57) **Abstract**

Method, comprising: providing a first laser beam (L0) having a first wavelength; providing a second laser beam (L1) having a second wavelength different from the first wavelength; optically combining (M1, M2; 312) the first laser beam (L0) and the second laser beam (L1) inside a laser processing head (100), and providing as a result of the combination a combined laser beam having a first component at the first wavelength and a second component at the second wavelength, and guiding (114, 115, 116) the combined beam towards a working region (20) to perform a welding and/or additive manufacturing processing on a high-reflectivity material.

Laser processing head (100) configured to perform welding and/or additive manufacturing processing operations in a working region (20) comprising high-reflectivity materials, the laser processing head (100) comprising:
a first input interface (IN0) configured to receive a first laser beam from a first laser source (L0), the first laser beam having a first wavelength; a second input interface (IN1) configured to receive a second laser beam from a second laser source (L1), the second laser beam having a second wavelength different from the first wavelength; at least one optical combining zone (M1, M2; 312) configured to combine the first laser beam (L0) and the second laser beam (L1) and provide as a result of the combination a combined laser beam having a first component at the first wavelength and a second component at the second wavelength, and an output interface (114, 115, 116) configured to guide the combined beam towards said working region (20) to perform said welding and/or additive manufacturing processing on said high-reflectivity material.

## Description

### Technical field

The description relates to a laser processing method and to an operating terminal for a processing machine configured to guide a set of laser beams onto a working surface.

One or more embodiments may be applied in contexts of additive manufacturing or 3D printing and welding of metallic materials (e.g., high reflectivity ones).

### Background

In the field of laser processing, there are multiple devices for transporting electromagnetic radiation, commonly known as "laser (processing) heads", operable as terminals of a laser processing machine. Each type of laser head can be specialized to perform a certain number or a certain set of laser processing operations at the same time. For example, there may be laser heads for laser welding, different from laser heads for laser cutting, as the optical paths used may be different.

Laser welding systems may be limited in processing high-reflectivity materials as the latter (such as copper) exhibit characteristics of low absorption and high thermal conductivity.

In general, high-reflectivity materials reflect most of the incident laser radiation instead of absorbing it. This means that only a small amount of energy is actually used to heat and melt the material, reducing the efficiency of the processing methods.

Due to the low absorbance, lasers with higher powers are used to achieve the same results that would be obtained with more absorbent materials. This leads to increased energy costs and can limit the speed of production processes.

Furthermore, excessive reflection can cause thermal fluctuations leading to the formation of defects such as porosity, cracks, or incomplete fusion. These defects compromise the structural integrity of the joint or the produced part.

Various approaches to the problem are discussed in the literature:
US 2005/0205537 A1 discusses a processing device and a control method for various processing tools of a material processing device for processing workpiece material. The workpiece can be processed by a first processing tool, which is generated by a first radiation source, particularly a laser source, in the form of a processing beam, and by means of at least one other processing tool of a different nature or origin, particularly a different radiation source, from the first processing tool, wherein the different processing tools can be brought into contact with a workpiece in order to process the material, and the processing of a workpiece can be performed by only one of the processing tools at any time;
TWM644413U discusses a mixed-wavelength laser processing module, which uses two laser light sources with different wavelengths, two collimating lenses, a beam splitter, and a focusing lens, and is arranged sequentially in front of the component; wherein, one of the two laser light sources is a high-brightness blue or ultraviolet semiconductor laser. The first and second laser beams will generate a combined beam in space after being collimated by individual collimating lenses and by the action of the beam splitter, and finally through the adjustment of the focusing lens, the combined beam generates a focus on the material to be processed for processing; since this module can overlap two types of laser beams with different wavelengths and different brightness, a stable melt pool is formed on the copper welding surface; therefore, this creation can not only improve. In addition to the stability of the copper welding process, the output power of the individual laser beams can also be reduced, thus improving the efficiency of laser welding;
CN112676702 discusses a method and an apparatus for precise micro-welding of non-ferrous metals via composite wavelengths, wherein a first laser beam produced by a first laser device is collimated with a second laser beam which is formed by the emission of a laser beam produced by a second laser device through a second laser galvanometer, then the combined laser is emitted through a first laser galvanometer, and the combined laser acts on a body to be welded through focusing; and a second focused laser spot moves in a first laser spot.

Despite the activities in the field, as evidenced for example by various documents listed above, further refined solutions are desirable.

Although some laser welding systems exist that use different laser sources or different laser heads, in such systems the sources work sequentially or independently from each other. Consequently, they suffer from one or more of the following disadvantages:
lack of thermal control, resulting in non-uniform energy distribution for welding and printing of high-reflectivity materials;
long cycle times and efficiency losses.

### Object and summary

An object of one or more embodiments is to contribute to overcoming the limitations of existing systems, by providing methods and systems with a multi-source laser head suitable particularly for welding and additive manufacturing (or 3D printing) applications of high-reflectivity materials.

According to one or more embodiments, this object can be achieved by means of a method having the features set forth in the following claims. A method for welding and/or additive manufacturing of high-reflectivity materials can be an example of such a method.

One or more embodiments may relate to a corresponding laser processing head. For example, the processing head can be configured to be translated over the working region via a transport structure (e.g., cantilever or robotic arm) of a processing machine.

The claims are an integral part of the technical teaching provided herein with reference to the embodiments.

Embodiments have the advantage of facilitating simultaneous and synergistic operation of a plurality of laser sources in a single machine processing head.

Unlike traditional systems, where the two sources work sequentially or independently from each other, the system described here facilitates the two sources to operate simultaneously, distributing heat uniformly on the welding and/or additive manufacturing (or 3D printing) joint.

One or more embodiments are dedicated to thermal control and uniform energy distribution for welding and/or additive manufacturing production of high-reflectivity materials.

One or more embodiments facilitate the reduction of defects in joints, the reduction of production cycle times, and the maintenance of efficiency.

One or more embodiments facilitate the phase change of high-reflectivity materials and their different absorbance, thus exploiting the multiple laser beams at the most sensitive points.

One or more embodiments increase the flexibility available to perform high-precision laser processing, particularly in welding and/or 3D printing.

### Brief description of various views of the drawings

One or more embodiments will now be described, by way of example only, with reference to the accompanying figures, in which:
Figure 1 comprises portions a) and b) and is exemplary of principles underlying one or more embodiments, and
Figure 2 is an exemplary diagram of a laser processing head according to one or more embodiments.

### Detailed description of exemplary embodiments

In the following description, one or more specific details are illustrated, for the purpose of providing an in-depth understanding of exemplary embodiments of this description. The embodiments can be obtained without one or more of the specific details or with other methods, components, materials, etc. In other instances, known operations, materials, or structures are not illustrated or described in detail so that certain aspects of the embodiments will not be obscured.

A reference to "an embodiment" within the context of this description is intended to indicate that a particular configuration, structure, or feature described in connection with the embodiment is included in at least one embodiment. Therefore, phrases such as "in one embodiment" that may be present in one or more points of this description do not necessarily refer to the same embodiment.

Furthermore, particular configurations, structures, or features may be combined in any suitable way in one or more embodiments.

The references used here are provided merely for convenience and therefore do not define the scope of protection or the scope of the embodiments.

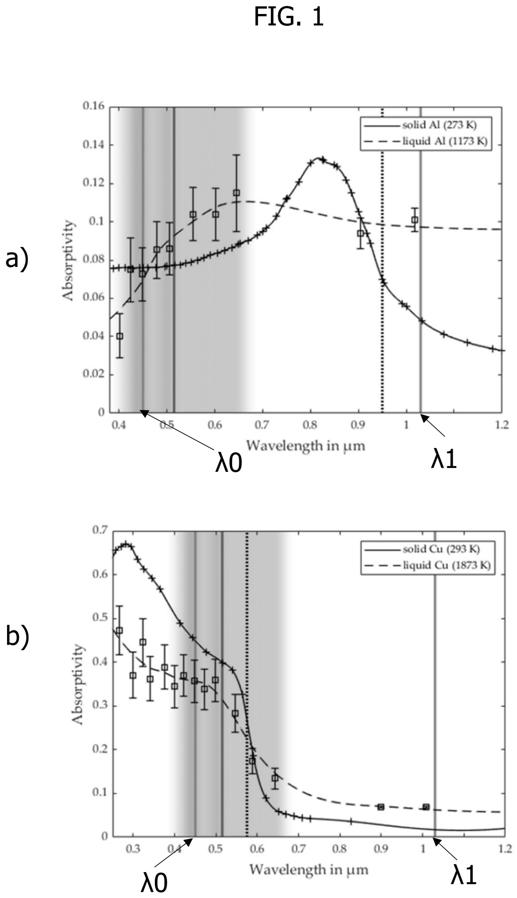

For instance, Figure 1 comprises:
- in portion a), plots (absorbance on the ordinate axis in arbitrary units, wavelength on the abscissa axis in microns) of the absorbance of aluminum in the solid state (solid line) compared with the same quantity for aluminum in the liquid state (dashed line);
- in portion b), plots (absorbance on the ordinate axis in arbitrary units, wavelength on the abscissa axis in microns) of the absorbance of copper in the solid state (solid line) compared with the same quantity for aluminum in the liquid state (dashed line).

As exemplified in Figure 1, high-reflectivity materials such as copper and aluminum present a significant challenge in laser processing processes, such as welding and additive manufacturing, due to the fact that during processing they change state (from solid to liquid) as a result of the absorbed laser energy. This phase transition causes a shift in the absorbance peak, so that single-source laser processing heads (e.g., emitting light at wavelength λ0 as exemplified in Figure 1) lose efficiency in transmitting laser power to the material during its processing.

It has been observed that the use of a plurality of laser sources at different wavelengths acting simultaneously on the same working area can mitigate the phenomenon discussed previously.

For example, by using, in addition to the laser with wavelength λ0, a further laser at a wavelength λ1 greater than λ0, it is possible to simultaneously have a high absorbance value for both the solid state and the liquid state of the high-reflectivity material (e.g., aluminum or copper) being processed.

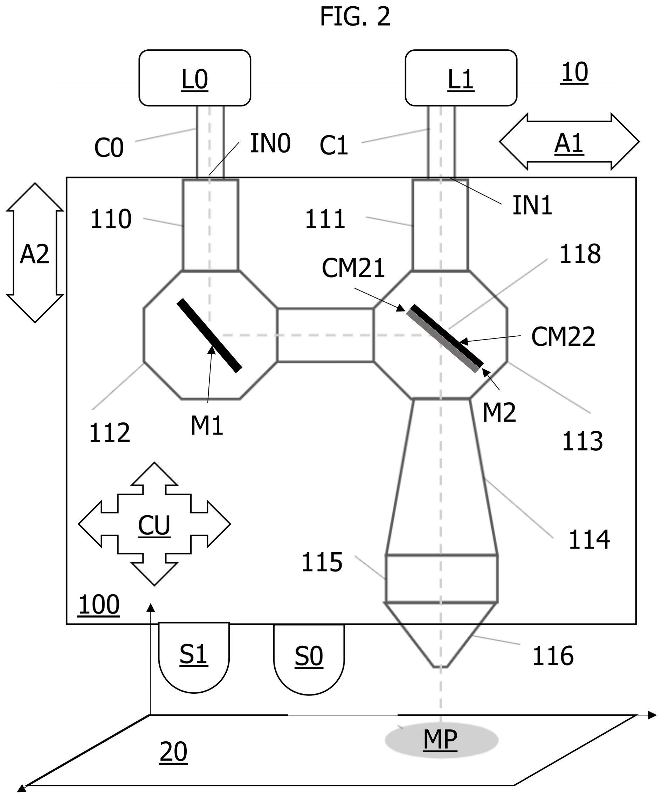

As exemplified in Figure 2, a laser processing apparatus 10 comprises a multi-source processing head 100 operable as a terminal of a laser processing machine, for example a processing machine with a transport structure (per se known, exemplified by arrows A1, A2 in Figure 2) configured to translate the laser head 100. For example, the transport structure A1, A2 can be of the cantilever type or of the anthropomorphic robotic arm type or of another type.

As said, the laser head 100 is configurable so as to perform at least one type of laser processing, such as welding or additive printing, applied to a material located in a working region 20, such as a sheet of high-reflectivity material (e.g., copper or aluminum).

As exemplified in Figure 2, the apparatus 10 can be arranged to flexibly operate a set of laser processing operations, including in particular welding, cladding, direct energy deposition (DED) additive manufacturing, ablation and so on.

As exemplified in Figure 2, the processing head 100 comprises:
a set of laser input interfaces IN0, IN1 wherein each input interface in the set of laser input interfaces IN0, IN1 is configured to be coupled to a respective laser source of a set of laser sources L0, L1 (e.g., via a respective optical fiber cable of a set of optical fiber cables CO, C1) configured to emit laser beams at different wavelengths λ0, λ1;
a set of collimating lenses 110, 111 coupled to the set of laser input interfaces IN0, IN1 and configured to collimate the laser beams from the laser sources L0, L1 towards a set of optical components M1, M2;
the set of optical components M1, M2 (e.g., mirrors), preferably orientable based on control signals provided by a control unit CU, the set of optical components M1, M2 being configured to guide the collimated laser beams and direct them simultaneously towards the working region 20 so as to produce a trace comprising a set of molten material zones MP so as to perform welding and/or 3D printing of the material in the working region 20;
a spacing element 114 coupled to at least one mirror (e.g., M2) in the set of mirrors M1, M2 and configured to provide a propagation space for the collimated laser beams inside the head 100;
a lens holder element 115 coupled to one end of the spacing element and configured to focus (e.g., via a focusing lens integrated in the window) the collimated laser beams towards the working region 20 and at the same time to prevent any beams reflected from the working surface 20 from damaging the optical components inside the head 100;
at least one nozzle 116 configured to output from the head 10 the guided laser beams after they have propagated through the spacing element 114 and the focusing lens 115 so as to bring them to the working region 20 to produce the trace of molten zones MP of high-reflectivity material.

For simplicity, in the following reference is made mainly to an exemplary case in which the plurality of laser sources comprises a pair of lasers, it being understood however that this case is purely exemplary and not limiting.

As exemplified in Figure 2, the set of sources comprises a first laser source L0 configured to emit laser light at a first wavelength λ0 and a second laser source L1 configured to emit laser light at a second wavelength λ1 different from the first wavelength λ0.

For example:
the laser source L1 is configured to provide a first laser beam having a first wavelength in the violet or ultraviolet spectrum (equal to, for example, 0.443 microns) and a first power (e.g., 500 to 1000 W), usable particularly for DED additive manufacturing and welding processing operations.
the second laser source L0 is configured to provide a second laser beam having a second wavelength in the near-infrared spectrum (equal to, for example, 1.070 microns).

In particular, both laser sources L0, L1 can be employed in processing operations (such as DED additive manufacturing, cutting and welding, for instance) where the materials to be treated are highly reflective materials.

In one or more embodiments, the sources L0, L1 can furthermore be configured to operate at variable and different powers from each other, in a per se known manner.

Highly reflective materials are also understood to mean those materials that tend to reflect an electromagnetic radiation impinging thereon, having a specific wavelength, at a percentage much higher than 50% of the incident light.

For example, the material in the working region 20 comprises a material selected from the set of materials comprising copper, brass, aluminum, silver, titanium, palladium, rhodium, platinum, chromium, magnesium and nickel.

Note that this list of possible laser processing operations and such pairings of processing operations to sources are presented purely by way of example, in no way limiting the types of laser processing operations that the apparatus can be arranged to operate flexibly.

In one or more embodiments, the switching on of the laser sources L0, L1 can be controlled via the control unit CU equipped on board the head 100. Alternatively, the sources may be provided with respective control units (not visible in Figure 2).

For example, the control unit CU can communicate commands that determine the switching on, with consequent emission of respective laser beams, or the switching off of one or more sources, or it can drive actuators (not visible in Figure 2) coupled to the optical elements M1, M2 to orient them to send the laser beam towards the nozzle 116. The laser beams emitted by the respective sources L0, L1 are thus supplied to the laser head 100 operable as a terminal of a laser processing machine 10 to perform at least one laser processing operation.

As exemplified in Figure 2, the set of laser input interfaces IN0, IN1 comprises:
a first input interface IN0, for example fiber-to-free-space, configured to be coupled to the first laser source L0 to receive from it the first laser beam at the first wavelength λ0, for example via a first optical fiber cable C0;
a second input interface IN1, for example optical-fiber-to-free-space, configured to be coupled to the second laser source L1, for example via a second optical fiber cable C1 to receive from it the second laser beam at the second wavelength λ1 different from (e.g., less than) the first wavelength λ0.

As exemplified in Figure 2, the set of collimating lenses 110, 111 comprises:
a first collimating lens 110 coupled to the first laser input interface IN0 and configured to collimate the first laser beam from the first laser source L0 towards a first optical component M1 of the set of optical components M1, M2;
a second collimating lens 111 coupled to the second laser input interface IN1 and configured to collimate the second laser beam from the second laser source L1 towards a second optical component M2 of the set of optical components M1, M2.

As exemplified in Figure 2, each collimating lens in the set of collimating lenses 110, 111 comprises collimating and focusing lenses that can be made of fused silica, for example having a geometric diameter D and a thickness T (e.g., D= 50±0.1 mm and T = 12.45±0.1 mm). For example, the surfaces of both collimators 110, 111 comprise an anti-reflective coating for the wavelengths emitted by the respective laser sources L0, L1 as well as a reflectivity index R < 0.5% for both wavelengths.

For example, the collimation and focusing optics 110, 111 exhibit reduced reflectivity at the wavelengths λ0, λ1 so as to allow both radiations to travel through the optics reducing power losses.

As exemplified in Figure 2, the optical components M1, M2 comprise a first mirror M1 and a second mirror M2, preferably mechanically orientable, in a manner per se known.

For example, each mirror M1, M2 is made of fused silica coated with thin film coatings ("coating") on the surfaces traversed by the laser and has a mirror diameter DM and a thickness TM (e.g., DM=75mm±0.1mm and TM=6±0.1mm).

As exemplified in Figure 2, the first mirror M1 is placed upstream of the second mirror M2 and is configured (e.g., via a specific coating) to reflect the first collimated laser beam having the first wavelength λ0 towards the second mirror M2.

As exemplified in Figure 2, the second mirror M2 presents:
a first coating CM21 on a first surface facing the end of the first collimator 110 from which the first laser L0 exits having a high reflectivity at the wavelength λ0 with a high reflectivity index IdR1 (e.g., IdR1>99.8%) and a high transmittance index IdT1 (e.g., IdT1>99%) at the first wavelength λ0;
a second coating CM22 on a second surface of the mirror M2 facing towards the source L0, the second coating CM22 having a reflection index of low reflectivity index IdR2 (e.g., IdR2<0.25%) at the first wavelength λ0.

As exemplified in Figure 2, the coating CM22 is directed towards the source L0 towards which it has high reflectivity, while the coating CM21 is directed towards the source L1 with high transmittance to it.

As exemplified in Figure 2, the spacing element 114 is designed via PADD and manufactured by additive manufacturing (e.g., with the powder bed fusion technology of a material such as an aluminum alloy (e.g., AlSi10Mg).

It is noted that in one or more embodiments the processing head 100 further comprises a plurality of auxiliary sub-systems, such as powder distribution nozzles for 3D printing and/or cooling channels of the head itself through which cooling liquid flows via heat exchange.

It is emphasized that the spacing element is represented here as being oriented perpendicular to the processing plane for simplicity, it being understood however that such an inclination is purely exemplary and not limiting. In one or more embodiments the spacing channel can be inclined so as to vary the powder flow provided during the 3D printing processing, for example.

As exemplified in Figure 2, in the working environment 20 there is a set of sensors SO, S1 (e.g., coupled to the head 100 during processing) configured to collect detection signals indicative of the processing state and to provide them to the control unit CU as feedback to verify that the processing proceeds according to instructions provided by an operator of the machine 10.

The proposed system features a single laser head equipped with two independent laser sources, configured to work simultaneously and synergistically.

The system allows the simultaneous use (e.g., via synchronized and simultaneous switching on of the sources L0, L1) of two sources L0, L1 with variable emission powers, which can be adjusted based on the material or the joint geometry, providing greater flexibility compared to single-source or dual-head systems with fixed adjustment.

Thermal control sensors, for example in real time, significantly reduce the possibility of overheating or incomplete welding, facilitating the provision of more reliable joints over time.

As exemplified here, a method comprises:
providing a first laser beam having a first wavelength;
providing a second laser beam having a second wavelength different from the first wavelength;
optically combining the first laser beam and the second laser beam inside a laser processing head, and providing as a result of the combination a combined laser beam having a first component at the first wavelength and a second component at the second wavelength, and
guiding the combined beam towards a working region to perform a welding and/or additive manufacturing processing.

As exemplified here, combining the first laser beam and the second laser beam inside a laser processing head comprises:
providing a first mirror along a first optical path of the first laser beam in free space and a second mirror along a second optical path in free space of the second laser beam,
wherein a first surface of the second mirror is configured to reflect the first laser beam towards the working region.

For example, the first surface of the second mirror is also configured to transmit the first and the second laser beam towards the working region.

For example, the second mirror has a second surface opposite the first surface and configured to transmit the combined laser beam towards the working region.

As exemplified here, the method comprises:
providing a first laser source configured to emit the first laser beam having the first wavelength, and
providing a second laser source configured to emit the second laser beam having the second wavelength.

For example, the laser sources are fiber optic laser sources.

As exemplified here, the method further comprises switching on the radiation sources in a synchronized manner, preferably at the same instant.

As exemplified here:
the second wavelength is within the wavelength range of violet, and
the first wavelength is within the wavelength range of infrared.

For example:
the working region comprises a high-reflectivity material on which to perform the welding and/or additive manufacturing processing,
the high-reflectivity material comprising a material selected from the group of materials comprising copper, brass, aluminum, silver, titanium, palladium, rhodium, platinum, chromium, magnesium and nickel.

As exemplified here, a laser processing head is configured to be coupled to a transport structure in a working region to perform welding and/or additive manufacturing processing operations.

For example, the laser processing head comprises:
a first input interface configured to receive a first laser beam from a first laser source, the first laser beam having a first wavelength;
a second input interface configured to receive a second laser beam from a second laser source, the second laser beam having a second wavelength different from the first wavelength;
at least one optical combining zone configured to combine the first laser beam and the second laser beam and provide as a result of the combination a combined laser beam having a first component at the first wavelength and a second component at the second wavelength, and
an output interface configured to guide the combined beam towards said working region to perform said welding and/or additive manufacturing processing.

For example, the beams emitted by the laser sources propagate along a transport optical fiber.

As exemplified here, at least one optical combining zone configured to combine the first laser beam and the second laser beam inside a laser processing head comprises:
a first mirror placed along a first optical path of the first laser beam in free space and a second mirror placed along a second optical path in free space of the second laser beam,
wherein a first surface of the second mirror is configured to reflect the first laser beam towards the working region,
wherein said first surface of the second mirror is also configured to transmit the first and the second laser beam towards the working region 20.

For example, the second mirror has a second surface opposite the first surface configured to transmit the combined laser beam towards the working region.

As exemplified here, the second laser source is configured to emit the first laser beam at the first wavelength within the wavelength range of violet, and the first laser source is configured to emit the second laser beam at the second wavelength within the wavelength range of infrared.

As exemplified here:
the working region comprises a high-reflectivity material on which to perform the welding and/or additive manufacturing processing,
the high-reflectivity material comprising a material selected from the group of materials comprising copper, brass, aluminum, silver, titanium, palladium, rhodium, platinum, chromium, magnesium and nickel.

While the fundamental principles remain, the details and embodiments may vary, even appreciably, from what has been described, purely by way of example, without departing from the scope of protection. The scope of protection is defined by the appended claims.

## Claims

1. A method, comprising:
providing a first laser beam (L0) having a first wavelength;
providing a second laser beam (L1) having a second wavelength different from the first wavelength;
optically combining (M1, M2; 312) the first laser beam (L0) and the second laser beam (L1) within a laser processing head (100; 300), and providing as a result of the combination a combined laser beam having a first component at the first wavelength and a second component at the second wavelength; and
guiding (114, 115, 116; 314, 316, 318) the combined beam towards a working area (20) to perform a welding and/or additive manufacturing operation, preferably direct energy deposition, DED.

2. The method according to claim 1, wherein optically combining (M1, M2; 312) the first laser beam (L0) and the second laser beam (L1) within a laser processing head (100; 300) comprises:
providing a first mirror (M1) along a first optical path of the first laser beam (L0) in free space and a second mirror (M2) along a second optical path in free space of the second laser beam (L1),
wherein a first surface (CM21) of the second mirror (M2) is configured to reflect the first laser beam (L0) towards the working area (20),
wherein said first surface (CM21) of the second mirror (M2) is also configured to transmit the first (L0) and second laser beams (L1) towards the working area (20).

3. The method according to claim 2, wherein the second mirror (M2) has a second surface (CM22) opposite to the first surface (CM21) configured to transmit the combined laser beam towards the working area (20).

4. The method according to any one of the previous claims, comprising:
providing a first laser source configured to emit the first laser beam (L0) having the first wavelength;
providing a second laser source configured to emit the second laser beam (L1) having the second wavelength;
preferably wherein the laser sources are fiber laser sources;
activating the radiation sources in a synchronized manner, preferably at the same time.

5. The method according to any one of the preceding claims, wherein:
the second wavelength is within the violet wavelength range; and
the first wavelength is within the infrared wavelength range.

6. The method according to any one of the preceding claims, wherein:
the working area (20) comprises a highly reflective material on which the welding and/or additive manufacturing operation is performed;
the highly reflective material comprises a material selected from the group consisting of copper, brass, aluminum, silver, titanium, palladium, rhodium, platinum, chromium, magnesium, and nickel.

7. The method of any one of the previous claims, wherein each of the first mirror (M1) and the second mirror (M2) are made of fused silica having at least one thin film coating (CM21, CM22) applied thereon.

8. The method of claim 7, wherein:
the first surface (CM21) of the second mirror (M2) configured to reflect the first laser beam (L0) at the first wavelength towards the working area (20) has a first thin film coating applied thereon,
the second surface (CM22) of the second mirror (M2) configured to transmit the combined laser beam towards the working area (20) has a second thin film coating applied thereon, the second coating different from the first coating.

9. A laser processing head (100; 300) configured to be coupled to a transport structure (A1, A2) in a working area (20) to perform welding and/or additive manufacturing operations, preferably direct energy deposition, DED, the laser processing head (100; 300) comprising:
a first input interface (IN0; IN0') configured to receive a first laser beam from a first laser source (L0), the first laser beam having a first wavelength;
a second input interface (IN1; IN1') configured to receive a second laser beam from a second laser source (L1), the second laser beam having a second wavelength different from the first wavelength;
at least one optical combination area (M1, M2; 312) configured to combine the first laser beam (L0) and the second laser beam (L1) and provide as a result of the combination a combined laser beam having a first component at the first wavelength and a second component at the second wavelength; and
an output interface (114, 115, 116; 314, 316, 318) configured to guide the combined beam towards said working area (20) to perform said welding and/or additive manufacturing operation.
preferably wherein the beams emitted by the laser sources (L0, L1) propagate along a transport optical fiber.

10. The laser processing head (100; 300) according to claim 9, wherein the at least one optical combination area (M1, M2; 312) configured to combine the first laser beam (L0) and the second laser beam (L1) within a laser processing head comprises:
a first mirror (M1) placed along a first optical path of the first laser beam (L0) in free space and a second mirror (M2) placed along a second optical path in free space of the second laser beam (L1),
wherein a first surface (CM21) of the second mirror (M2) is configured to reflect the first laser beam (L0) towards the working area (20),
wherein said first surface (CM21) of the second mirror (M2) is also configured to transmit the first (L0) and second laser beams (L1) towards the working area (20).

11. The laser processing head (100; 300) according to claim 10, wherein the second mirror (M2) has a second surface (C22) opposite to the first surface (C21) configured to transmit the combined laser beam towards the working area (20).

12. The laser processing head (100; 300) according to any one of claims 9 to 11, wherein:
the second laser source (L1) is configured to emit the first laser beam at a first wavelength within the violet wavelength range; and
the first laser source (L0) is configured to emit the second laser beam at a second wavelength within the infrared wavelength range.

13. The laser processing head (100; 300) according to any one of claims 9 to 12, wherein:
the working area (20) comprises a highly reflective material on which the welding and/or additive manufacturing operation is performed, and/or
the highly reflective material comprises a material selected from the group consisting of copper, brass, aluminum, silver, titanium, palladium, rhodium, platinum, chromium, magnesium, and nickel.

14. The laser processing head (100; 300) of any one of claims 9 to 13, wherein each of the first mirror (M1) and the second mirror (M2) are made of fused silica having at least one thin film coating (CM21, CM22) applied thereon.

15. The laser processing head (100; 300) of claim 14, wherein:
the first surface (CM21) of the second mirror (M2) configured to reflect the first laser beam (L0) at the first wavelength towards the working area (20) has a first thin film coating applied thereon,
the second surface (CM22) of the second mirror (M2) configured to transmit the combined laser beam towards the working area (20) has a second thin film coating applied thereon, the second coating different from the first coating.
